# EUROPÄISCHE PATENTSCHRIFT

(11) **EP 3 820 271 B1**
(45) Veröffentlichungstag und Bekanntmachung des Hinweises auf die Patenterteilung: **20.10.2021**
(21) Anmeldenummer: 20774974.8
(22) Anmeldetag: 17.09.2020
(51) Int. Cl.: A01C 23/00

(54) **VERTEILVORRICHTUNG FÜR EINE TRÜBE**
DISTRIBUTION APPARATUS FOR A SLURRY
APPAREIL DE DISTRIBUTION POUR LISIER

(30) Priorität: 01.10.2019 DE 102019215135
(43) Veröffentlichungstag der Anmeldung: 19.05.2021
(73) Patentinhaber: Röhren- und Pumpenwerk Bauer Ges.mbH, 8570 Voitsberg (AT)
(72) Erfinder: Roiss, Otto, 8010 Graz (AT)
(74) Vertreter: Hoefer & Partner Patentanwälte mbB
(86) Internationale Anmeldenummer: PCT/EP2020/076019
(87) Internationale Veröffentlichungsnummer: WO 2021/063694

(56) Entgegenhaltungen:
- EP-A1- 3 175 696
- DE-U1-202013 008 267
- FR-A1- 2 851 482

## Beschreibung

Die Erfindung betrifft eine Verteilvorrichtung für eine Trübe. Die Trübe enthält flüssige und feste Bestandteile. Bei der Trübe handelt es sich insbesondere um Gülle oder Klärschlamm. Die Verteilvorrichtung kommt insbesondere an einem Güllefass oder Ähnlichem zum Einsatz und dient dazu, die Trübe auf eine Vielzahl von Schläuchen zu verteilen.

Eine vorbekannte Verteilvorrichtung zeigt DE 10 2015 121 039 A1 (EP 3 175 696 A1). Diese Verteilvorrichtung weist im Inneren des Gehäuses ein Rotor mit mehreren Messern auf. Die Messer überstreifen dabei die Vielzahl an Auslässen, die zu den einzelnen Schläuchen führen. Die Auslässe sind dadurch zeitweise durch die Messer verschlossen. Damit es dabei nicht zu einem Unterdruck in den Auslässen bzw. Schläuchen kommt, wird die Verteilvorrichtung mit Druckluft versorgt, die über die Messer in die Auslässe strömt. In der vorbekannten Anordnung erfolgt das Zuführen der Druckluft durch eine hohle Antriebswelle hindurch.

Es ist eine Aufgabe vorliegender Erfindung, eine Verteilvorrichtung für eine flüssige und feste Bestandteile enthaltende Trübe bereitzustellen, die bei wartungsarmen Betrieb eine möglichst gute Verteilung der Trübe auf möglichst viele Auslässe ermöglicht.

Die Lösung der Aufgabe erfolgt durch die Merkmale des unabhängigen Anspruchs. Die abhängigen Ansprüche haben vorteilhafte Ausgestaltungen der Erfindung zum Gegenstand.

Somit wird die Aufgabe gelöst durch eine Verteilvorrichtung für eine Trübe. Die Trübe enthält flüssige und feste Bestandteile. Insbesondere handelt es sich bei der Trübe um Gülle oder Klärschlamm. Die Verteilvorrichtung umfasst ein Gehäuse mit einem Zulauf für die Trübe, einer antriebsseitigen Stirnwand, einer gegenüberliegenden weiteren Stirnwand und mehreren Auslässen. Die gegenüberliegende weitere Stirnwand wird insbesondere auch als zulaufseitige Stirnwand bezeichnet, da der Zulauf für die Trübe vorzugsweise an dieser Stirnwand angeordnet ist, sodass die Trübe durch die zulaufseitige Stirnwand hindurch in das Innere des Gehäuses fließen kann. Der Zulauf weist hierzu einen relativ großen Durchmesser, beispielsweise im Bereich von 5 bis 30 cm auf.

Die mehreren Auslässe sind an zumindest einer der beiden Stirnwände angeordnet. Besonders bevorzugt ist vorgesehen, dass an beiden Stirnwänden eine Vielzahl an Auslässen vorgesehen ist. Insbesondere sind an jeder Stirnwand zumindest zehn Auslässe vorgesehen. Die Verteilvorrichtung ist dazu vorgesehen, die über den Zulauf zugeführte Trübe auf diese Auslässe zu verteilen. Die Auslässe umfassen insbesondere rohrförmige, von den Stirnwänden nach außen ragende Elemente, an die Schläuche angeschlossen werden können. Jeder Auslass umfasst eine Öffnung in der jeweiligen Stirnwand und vorzugsweise auch eine dazu flüchtende Öffnung in einer bevorzugten Schneidscheibe, die gehäuseinnenseitig an der Stirnwand montiert ist.

Des Weiteren umfasst die Verteilvorrichtung einen im Gehäuse drehbar angeordneten Rotor. Der Rotor definiert eine Drehachse. Die Drehachse erstreckt sich insbesondere senkrecht zu den beiden Stirnwänden und insbesondere durch die Mittelpunkte der beiden Stirnwände. Der Rotor befindet sich im Inneren des Gehäuses und somit zwischen den beiden Stirnwänden. Die beiden Stirnwände sind hierzu insbesondere voneinander beabstandet, wobei sie vorzugsweise über einen zylindrischen Gehäusemantel miteinander verbunden sind. Dieser zylindrische Gehäusemantel umgibt das Innere des Gehäuses bzw. den Rotor an der radialen Außenseite.

Der Rotor weist zumindest eine Messeranordnung auf. Besonders bevorzugt umfasst der Rotor mehrere Messeranordnungen, beispielsweise drei, vier oder sechs Messeranordnungen. Jede Messeranordnung ist zum gehäuseinnenseitigen Überstreifen der Auslässe angeordnet, sodass an diesen Stellen die festen Bestandteile der Trübe möglichst zerkleinert werden und zu keiner Verstopfung führen. An der Innenseite der jeweiligen Stirnwand kann eine Schneidplatte des Gehäuses angeordnet sein. Die Schneidplatte ist insbesondere ringförmig und weist für jeden Auslass ein Durchgangsloch auf. Die Messeranordnungen überstreifen entsprechend die Innenseite der jeweiligen Schneidplatte. Die Schneidplatten sind vorzugsweise auswechselbar angeordnet. Jeder Messeranordnung umfasst vorzugsweise zwei gegenüberliegende Messer, die die Auslässe an den gegenüberliegenden Stirnwänden bzw. Schneidplatten überstreifen.

Des Weiteren umfasst die Verteilvorrichtung eine Antriebseinheit. Die Antriebseinheit weist einen außerhalb des Gehäuses angeordneten Motor und eine Antriebswelle auf. Die Antriebswelle ist insbesondere koaxial zur Drehachse des Rotors angeordnet und entsprechend mit dem Rotor zum Antrieb des Rotors verbunden. Besonders bevorzugt ist auch die Ausgangswelle des Motors koaxial zur Drehachse angeordnet, sodass sich sämtliche Wellen koaxial zur Drehachse erstrecken. Bei dem Motor handelt es sich vorzugsweise um einen Hydraulikmotor. Die Antriebswelle führt durch die antriebsseitige Stirnwand hindurch und verbindet somit den außenseitig angeordneten Motor mit dem innenseitig angeordneten Rotor. Der Rotor umfasst eine Luftverteilkammer. Diese Luftverteilkammer ist zum Verteilen bzw. Weiterleiten von Druckluft auf die zumindest eine Messeranordnung vorgesehen. Insbesondere ist die Luftverteilkammer zum Verteilen der Druckluft auf die mehreren, insbesondere alle, Messeranordnungen ausgebildet.

Die Verteilvorrichtung umfasst einen Luftübertragungsraum. Dieser Luftübertragungsraum führt durch die antriebsseitige Stirnwand hindurch. Der Luftübertragungsraum ist koaxial zur und radial außerhalb der Antriebswelle angeordnet. Es handelt sich hierbei um einen ringförmigen Raum. Gehäuseaußenseitig ist der Luftübertragungsraum mit einer Luftzufuhr für Druckluft und gehäuseinnenseitig mit der Luftverteilkammer luftleitend verbunden.

Der Luftübertragungsraum ermöglicht es, die Druckluft durch die antriebsseitige Stirnwand hindurch in den drehenden Rotor bzw. dessen Luftverteilkammer zu übertragen. Dabei verläuft der Luftübertragungsraum ringförmig außerhalb der Antriebswelle. Dies hat zum Vorteil, dass die Antriebswelle nicht so ausgestaltet werden muss, dass in ihrem Inneren die Luft übertragen werden kann. Eine Luftübertragung durch die Antriebswelle hindurch bedarf nämlich eines entsprechend großen hohlen Innendurchmessers der Antriebswelle und entsprechende Durchbrüche in der Antriebswelle, um die Druckluft in die Antriebswelle hineinzuführen. Dies ist bei vorliegender Verteilvorrichtung nicht vorgesehen. Vielmehr kann hier die Antriebswelle mit entsprechend kleinem Durchmesser verwendet werden, da die Luft radial außerhalb der Antriebswelle im Luftübertragungsraum übertragen wird. Der ringförmige Luftübertragungsraum wiederum kann relativ schmal ausgebildet sein, da über seinen gesamten Umfang Luft übertragen wird und somit ausreichend Fläche zur Luftübertragung bereitsteht. Dies wiederum führt dazu, dass auf der antriebsseitigen Stirnwand ausreichend Bauraum für die Vielzahl an Auslässen zur Verfügung steht. Diese Auslässe befinden sich insbesondere radial außerhalb des Luftübertragungsraums.

Bevorzugt ist vorgesehen, dass die Luftverteilkammer durch eine antriebsseitige Rotoraußenwand und eine zur Rotoraußenwand entlang der Drehachse beabstandete Rotorinnenwand gebildet ist. Besonders bevorzugt stehen die Rotoraußenwand und die Rotorinnenwand im Wesentlichen senkrecht zur Drehachse. Die Luftverteilkammer muss gegenüber der Trübe nicht dicht ausgebildet sein, da im Regelfall stetig Druckluft zugeführt wird und die Luftverteilkammer aufgrund des Überdrucks frei von Trübe bleibt. Zusätzlich zu der antriebsseitigen Rotoraußenwand kann der Rotor noch eine weitere Rotoraußenwand aufweisen. Diese weitere Rotoraußenwand ist vorzugsweise näher dem Zulauf zugeordnet und wird auch als zulaufseitige Rotoraußenwand bezeichnet. Die Rotorinnenwand befindet sich dann zwischen den beiden Rotoraußenwänden, vorzugsweise näher an der antriebsseitigen Rotoraußenwand.

Die Rotoraußenwände und die Rotorinnenwand sind insbesondere senkrecht zur Drehachse angeordnet. Radial außerhalb dieser Wände befinden sich die Messeranordnungen. Die Messeranordnungen werden noch im Detail beschrieben.

Die weitere Rotoraußenwand weist vorzugsweise einen Durchbruch auf. Dieser Durchbruch fluchtet mit dem Zulauf für die Trübe, sodass durch den Durchbruch hindurch die Trübe in das Innere des Rotors strömen kann. Dieser innere Bereich des Rotors wird als "Trübenraum" bezeichnet. Vorzugsweise ist der Rotor an seiner radialen Außenseite stellenweise offen, sodass die Trübe aus dem Trübenraum hindurch radial nach außen in den Freiraum zwischen Rotor und Gehäuse strömen kann. So ist insbesondere vorgesehen, dass die zuströmende Trübe sich durch den Durchbruch in der zulaufseitigen Rotoraußenwand in den Trübenraum verteilt. Von dem Trübenraum kann die Trübe radial nach außen in den Freiraum zwischen Rotor und Gehäuse strömen. Des Weiteren ist insbesondere vorgesehen, dass die zulaufseitige Rotoraußenwand von der zulaufseitigen Stirnwand des Gehäuses beabstandet ist, sodass die über den Zulauf kommende Trübe auch unmittelbar radial nach außen und nicht nur über den Durchbruch in den Trübenraum strömen kann.

Am Rotor ist eine erste Breite definiert. Dabei handelt es sich insbesondere um die größte Breite des Rotors. Diese erste Breite entspricht im Wesentlichen dem Abstand zwischen zwei gegenüberliegenden Messern bzw. dem lichten Abstand zwischen beiden Schneidplatten. Des Weiteren ist eine zweite Breite der Luftverteilkammer definiert. Beide Breiten werden parallel zur Drehachse gemessen. Die zweite Breite beschreibt die größte lichte Weite in der Luftverteilkammer parallel zur Drehachse. Bevorzugt ist vorgesehen, dass die zweite Breite höchstens 50 %, besonders vorzugsweise höchstens 35 %, insbesondere höchstens 25 %, der ersten Breite beträgt. Durch dieses Größenverhältnis wird sichergestellt, dass die Luftverteilkammer im Vergleich zum Trübenraum nicht zu groß ausgestaltet ist und dadurch ausreichend Platz für den Trübenraum verbleibt.

Des Weiteren ist bevorzugt vorgesehen, dass die Luftverteilkammer radial innenseitig durch die Antriebswelle begrenzt ist. Die Antriebswelle erstreckt sich somit in die Luftverteilkammer. Die Luftverteilkammer kann auch als ringförmiger Raum um die Antriebswelle herum beschrieben werden.

Insbesondere ist hierzu Folgendes vorgesehen: Die Luftverteilkammer weist in der antriebsseitigen Rotoraußenwand eine Öffnung auf. Durch diese Öffnung verläuft die Antriebswelle in das Innere des Rotors. Dabei ist radial außerhalb der Antriebswelle ein ringförmiger Bereich der Öffnung gebildet, der einen Übergang des Luftübertragungsraums in die Luftverteilkammer darstellt. Die Öffnung in der Rotoraußenwand ist folglich größer als der Außendurchmesser der Antriebswelle, sodass außerhalb der Antriebswelle in der Öffnung der ringförmige Bereich verbleibt und dadurch ein Übergang vom Luftübertragungsraum in die Luftverteilkammer gebildet ist.

Des Weiteren ist bevorzugt vorgesehen, dass die Antriebswelle an der Rotorinnenwand angeflanscht ist und die Rotorinnenwand zur Übertragung des Drehmoments von der Antriebswelle auf den Rest des Rotors angeordnet und ausgebildet ist. Hierzu ist die Rotorinnenwand insbesondere mit der antriebsseitigen Rotoraußenwand und/oder dem radial äußeren Bestandteil des Rotors verbunden. Besonders bevorzugt weist die Antriebswelle einen Wellenflansch auf. Dieser Wellenflansch ist, insbesondere mit Bolzen, mit der Rotorinnenwand verbunden. Hierzu kann die Rotorinnenwand mit einer Flanschplatte verstärkt sein.

Des Weiteren ist bevorzugt vorgesehen, dass die Antriebseinheit eine Motorglocke umfasst. Die Antriebswelle ist in der Motorglocke drehbeweglich gelagert. Eine Seite der Motorglocke ist an der antriebsseitigen Stirnwand des Gehäuses angeflanscht. An der gegenüberliegenden Seite der Motorglocke ist der Motor angeflanscht. Die Luftzufuhr ist an der Motorglocke ausgebildet. Insbesondere sind hierzu an der Motorglocke mehrere Anschlussstutzen vorgesehen, an die Druckluftleitungen anschließbar sind. Von diesen Anschlussstutzen wird die Druckluft in das Innere der Motorglocke geführt.

Besonders bevorzugt ist an der Motorglocke auch ein Spülanschluss vorgesehen. An den Spülanschluss kann eine Wasserleitung oder Druckluftleitung angeschlossen werden. Der Spülanschluss führt durch das Innere der Motorglocke ebenfalls zum Luftübertragungsraum.

In bevorzugter Ausführung ist vorgesehen, dass der Luftübertragungsraum radial außenseitig durch einen zur Drehachse koaxialen Ringbereich begrenzt ist. Dieser Ringbereich kann auf zweierlei Varianten gebildet sein:
Gemäß der ersten Variante ist bevorzugt vorgesehen, dass der Ringbereich ein Bestandteil des Rotors ist und somit zusammen mit dem Rotor rotiert. Zwischen dem Ringbereich, insbesondere seiner radialen Außenseite und der Motorglocke ist bevorzugt eine erste gleitende Dichtung angeordnet. Die erste gleitende Dichtung ist insbesondere ein Wellendichtring. Besonders bevorzugt wird hier der Ringbereich durch einen im Querschnitt L-förmigen Ring gebildet, der außenseitig an der antriebsseitigen Rotoraußenwand angeordnet ist.

Gemäß der zweiten Variante befindet sich der Ringbereich motorglockenseitig und rotiert somit nicht mit dem Rotor. Der Ringbereich kann dabei integraler Bestandteil der Motorglocke sein oder an der Motorglocke befestigt sein. Dementsprechend ist dann bevorzugt zwischen dem Ringbereich, insbesondere seiner radialen Außenseite, und dem Rotor die erste gleitende Dichtung angeordnet.

In beiden Varianten bildet der Ringbereich die radial außenseitige Begrenzung des Luftübertragungsraums. Insbesondere ist dabei vorgesehen, dass die Motorglocke durch die antriebsseitige Stirnwand hindurch in das Innere des Gehäuses ragt, dabei vom Rotor beabstandet ist und der Ringbereich eben diesen Abstand überbrückt. Radial außerhalb des Ringbereichs, in dem kleinen Abstand zwischen Rotor und Motorglocke befindet sich beim Betrieb der Verteilvorrichtung insbesondere die Trübe. Der Ringbereich grenzt den Luftübertragungsraum gegenüber der Trübe ab.

Des Weiteren ist bevorzugt vorgesehen, dass der Luftübertragungsraum radial innenseitig durch die Motorglocke und/oder die Antriebswelle begrenzt ist. Dabei ist vorzugsweise zwischen der Antriebswelle und der Motorglocke eine zweite gleitende Dichtung, insbesondere als Wellendichtring, angeordnet. Hierzu kann auf der Antriebswelle eine entsprechende Gleithülse angeordnet sein. Da, wie bereits beschrieben, die Antriebswelle sich vorzugsweise in den Luftübertragungsraum erstreckt und an der Rotorinnenwand angeflanscht ist, muss diese zweite Dichtung den Luftübertragungsraum und/oder Luftverteilkammer zum Drehlager der Antriebswelle hin abdichten.

In der Motorglocke ist vorzugsweise eine Glockenringkammer ausgebildet. Diese Glockenringkammer geht in den Luftübertragungsraum über. In die Glockenringkammer mündet die Luftzufuhr, insbesondere ist die Glockenringkammer luftleitend mit den mehreren Anschlussstutzen für die Druckluft verbunden.

Im Folgenden wird eine Messeranordnung des Rotors genauer erläutert. Besonders bevorzugt umfasst der Rotor mehrere der Messeranordnungen. Insbesondere sind alle Messeranordnungen gleich ausgestaltet.

Die einzelne Messeranordnung umfasst einen Hohlraum und zumindest ein ring- oder rohrförmiges Messer. Das Innere des ring- oder rohrförmigen Messers kann dabei insbesondere einen Teil dieses Hohlraums der Messeranordnung darstellen. Der Hohlraum der Messeranordnung ist luftleitend mit der Luftverteilkammer verbunden. Dadurch kann die Druckluft auch in das Innere des ring- oder rohrförmigen Messers strömen. Beim Drehen des Rotors überstreift das Messer gehäuseinnenseitig die Auslässe, insbesondere die entsprechende Schneidplatte. Dabei wird der Hohlraum der Messeranordnung durch das ring- oder rohrförmige Messer hindurch luftleitend mit dem jeweiligen Auslass verbunden. Dadurch kann die Druckluft von der Luftverteilkammer durch den Hohlraum der Messeranordnung hindurch in den Auslass strömen.

Besonders bevorzugt ist vorgesehen, dass jede Messeranordnung ein Rohr umfasst. In dem Rohr ist vorzugsweise zumindest ein Messer gleitgelagert. Das Messer ist durch die Gleitlagerung parallel zur Drehachse beweglich. Des Weiteren ist bevorzugt vorgesehen, dass das Messer federbelastet ist und durch die Feder nach außen gedrückt wird.

Besonders bevorzugt sind pro Messeranordnung und somit in jedem Rohr zwei Messer angeordnet. Bei dieser Ausgestaltung sind an beiden Stirnwänden des Gehäuses Auslässe vorgesehen. Insbesondere werden die beiden Messer von einer gemeinsamen Feder nach außen gedrückt. Das gemeinsame Rohr sowie die beiden Messer bilden zusammen einen Hohlraum, der mit Druckluft versorgt werden muss.

Jeder Hohlraum, insbesondere jedes Rohr, weist bevorzugt zumindest eine Aussparung auf. Die Aussparung verbindet den Hohlraum direkt mit der Luftverteilkammer oder indirekt über eine Zwischenkammer mit der Luftverteilkammer.

In bevorzugter Ausführung ist vorgesehen, dass der Hohlraum zumindest einer Messeranordnung über eine Aussparung mit einer Zwischenkammer des Rotors luftleitend verbunden ist. Insbesondere sind die Hohlräume mehrerer Messeranordnungen über jeweils eine Aussparung mit einer gemeinsamen Zwischenkammer des Rotors luftleitend verbunden.

Die Zwischenkammer wiederum ist luftleitend mit der Luftverteilkammer verbunden. Der Rotor kann mehrere Zwischenkammern aufweisen.

Der Rotor kann eine Rotorradialwand zur Bildung der Zwischenkammer aufweisen. Die Zwischenkammer befindet sich dann radial außerhalb dieser Rotorradialwand. An der radialen Außenseite kann die Zwischenkammer durch weitere Wände und/oder durch die Rohre der Messeranordnungen begrenzt sein.

Besonders bevorzugt ist vorgesehen, dass die Zwischenkammer eine Radialluftöffnung aufweist. Diese Radialluftöffnung erstreckt sich in radialer Richtung, insbesondere durch die Rotorradialwand hindurch. Die Radialluftöffnung führt zumindest teilweise in Richtung des Trübenraums. Die Rotorinnenwand weist vorzugsweise eine Axialluftöffnung auf. Die Axialluftöffnung führt durch die Rotorinnenwand hindurch in Richtung des Trübenraums. Um die Axialluftöffnung in der Rotorinnenwand mit der Radialluftöffnung in der Rotorradialwand zu verbinden, ist ein Übergangsstück vorgesehen. Dieses Übergangsstück verbindet die Axialluftöffnung mit der Radialluftöffnung und verbindet somit die Luftverteilkammer mit der Zwischenkammer. Das Übergangsstück erstreckt sich durch den Trübenraum des Rotors hindurch. Durch diese Konstruktion ist es möglich, bei einer relativ schmalen Luftverteilkammer die Luftverteilkammer mit relativ großem Querschnitt (Querschnitt der Axialluftöffnung, Radialluftöffnung und des Übergangsstücks) mit der Zwischenkammer zu verbinden.

Die Erfindung umfasst des Weiteren ein Fahrzeug, ausgebildet als Anhänger oder Selbstfahrer, mit einem Tank zum Transport der Trübe. Das Fahrzeug umfasst zumindest eine der hier beschriebenen Verteilvorrichtungen. Der Zulauf der Verteilvorrichtung ist dabei an den Tank angeschlossen. An den Auslässen befinden sich Schläuche zum Verteilen der Trübe auf eine landwirtschaftliche Fläche.

Weitere Einzelheiten, Vorteile und Merkmale der vorliegenden Erfindung ergeben sich aus nachfolgender Beschreibung eines Ausführungsbeispiels anhand der Zeichnung. Es zeigen:

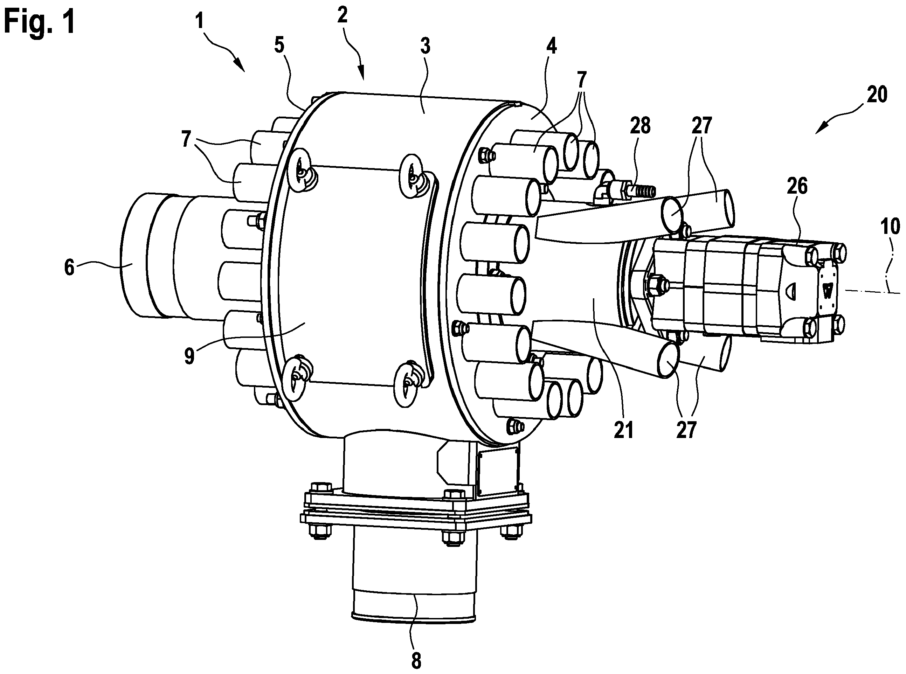

- Fig. 1: eine erfindungsgemäße Verteilvorrichtung gemäß einem Ausführungsbeispiel,
- Fig. 2: eine Antriebseinheit der erfindungsgemäßen Verteilvorrichtung gemäß dem Ausführungsbeispiel,
- Fig. 3: eine Schnittansicht der erfindungsgemäßen Verteilvorrichtung gemäß dem Ausführungsbeispiel,
- Fig. 4: einen Rotor der erfindungsgemäßen Verteilvorrichtung gemäß dem Ausführungsbeispiel,
- Fig. 5: eine weitere Ansicht des Rotors der erfindungsgemäßen Verteilvorrichtung gemäß dem Ausführungsbeispiel,
- Fig. 6: eine Rotorinnenwand des Rotors der erfindungsgemäßen Verteilvorrichtung gemäß dem Ausführungsbeispiel,
- Fig. 7: eine erste Schnittansicht des Rotors der erfindungsgemäßen Verteilvorrichtung gemäß dem Ausführungsbeispiel, und
- Fig. 8: eine zweite Schnittansicht des Rotors der erfindungsgemäßen Verteilvorrichtung gemäß dem Ausführungsbeispiel.

Im Folgenden wird eine Verteilvorrichtung 1 anhand der Figuren im Detail erläutert. Dabei wird, soweit nicht explizit anders erwähnt, stets auf alle Figuren Bezug genommen.

Die Verteilvorrichtung 1 ist zur Verteilung von Trübe, insbesondere Gülle oder Klärschlamm, ausgebildet. Die Verteilvorrichtung 1 ist zur Anordnung an einem Fahrzeug mit einem Tank zur Aufnahme der Gülle ausgebildet.

Die Verteilvorrichtung umfasst ein Gehäuse 2, eine Antriebseinheit 20 und einen Rotor 40. Der Rotor 40 befindet sich im Inneren des Gehäuses 2.

Das Gehäuse 2 umfasst einen Gehäusemantel 3 zwischen einer antriebsseitigen Stirnwand 4 und einer zulaufseitigen Stirnwand 5. Die beiden Stirnwände 4, 5 sind mit dem Gehäusemantel 3 verschraubt. Der Gehäusemantel 3 mit den beiden Stirnwänden 4, 5 bildet den Innenraum des Gehäuses 2, in dem der Rotor 40 angeordnet ist. Der Rotor 40 dreht um eine Drehachse 10. Die Drehachse 10 schneidet die beiden Stirnwände 4, 5.

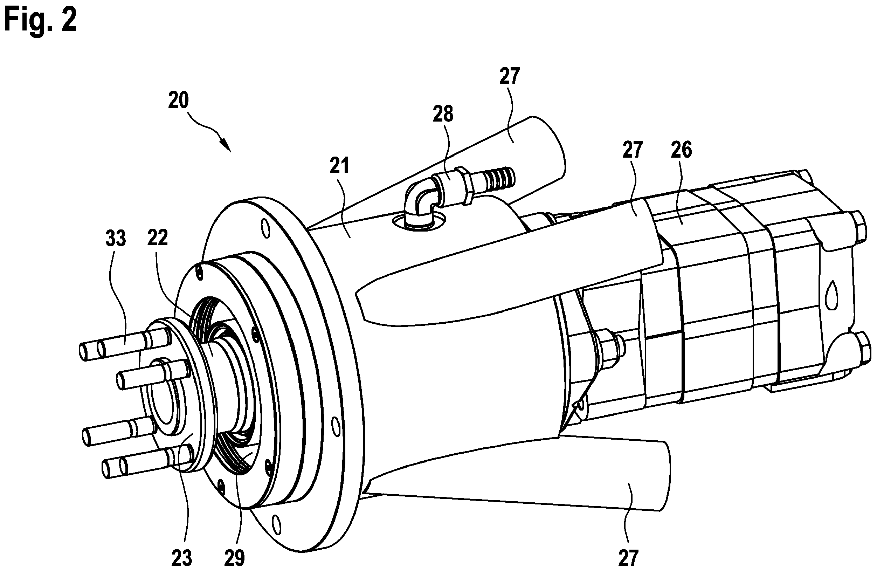

An der antriebsseitigen Stirnwand 4 ist die Antriebseinheit 20 angeflanscht. Diese wird im Detail anhand von Fig. 2 erläutert.

An der zulaufseitigen Stirnwand 5 des Gehäuses 2 ist koaxial zur Drehachse 10 ein Zulauf 6 ausgebildet. Über diesen Zulauf 6 kann die Trübe in das Innere des Gehäuses 2 gelangen. Auf der gegenüberliegenden Seite, an der antriebsseitigen Stirnwand 4, ist die Antriebseinheit 20 ebenfalls koaxial zur Drehachse 10 angeflanscht. An beiden Stirnwänden 4, 5 befindet sich eine Vielzahl an Auslässen 7. An der zulaufseitigen Stirnwand 5 sind die Auslässe 7 rings um den Zulauf 6 angeordnet. An der antriebsseitigen Stirnwand 4 sind die Auslässe 7 rings um die angeflanschte Antriebseinheit 20 angeordnet. An den Auslässen 7, die hier kurze Rohrstücke umfassen, können Schläuche zum weiteren Verteilen der Trübe angeschlossen werden.

Das Gehäuse 2 weist am Gehäusemantel 3 zumindest einen Deckel 9 auf. Der Deckel 9 ist mit dem restlichen Gehäusemantel 3 verschraubt und kann zu Revisionszwecken geöffnet werden.

Des Weiteren weist das Gehäuse 2 an der Unterseite des Gehäusemantels 3 einen Ablauf 8 auf. Über diesen Ablauf 8 kann nicht verteilte Trübe bzw. große Feststoffanteile aus dem Inneren des Gehäuses 2 abgeführt werden.

Wie beispielsweise Fig. 2 zeigt, umfasst die Antriebseinheit 20 eine Motorglocke 21. Die Motorglocke 21 kann an das Gehäuse 2 angeflanscht werden.

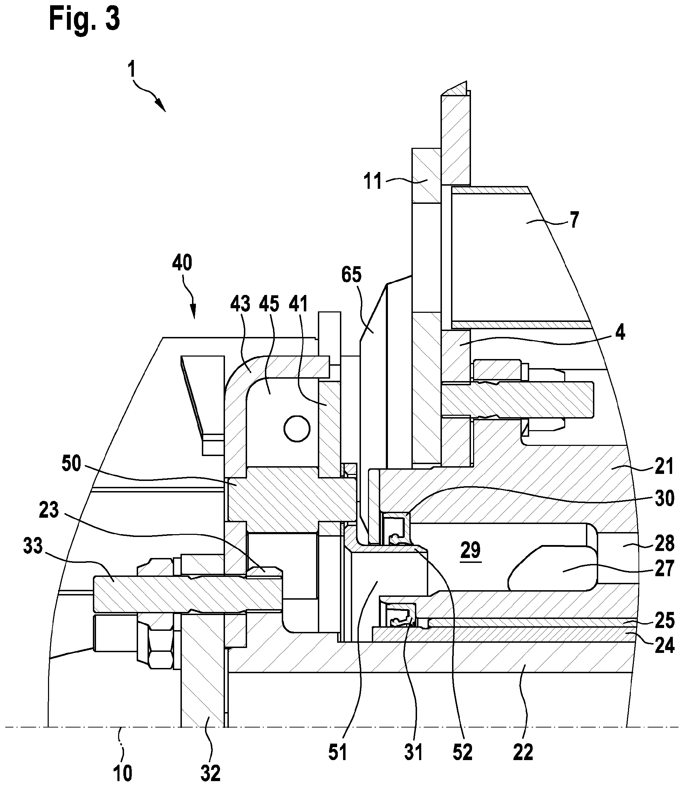

Des Weiteren umfasst die Antriebseinheit 20 eine Antriebswelle 22. Am innenseitigen Ende der Antriebswelle 22 ist ein Wellenflansch 23 ausgebildet. Von diesem Wellenflansch 23 erstrecken sich parallel und versetzt zur Drehachse 10 mehrere Bolzen 33. Die Verbindung der Antriebswelle 22 mit dem innenliegenden Rotor 40 wird anhand von Fig. 3 noch genauer erläutert.

Fig. 2 verdeutlicht ferner, dass die Motorglocke 21 eine Luftzufuhr 27 mit vier Anschlussstutzen für Druckluft umfasst. Über jede Luftzufuhr 27 kann Druckluft in das Innere der Motorglocke 21, insbesondere in eine Glockenringkammer 29 (s. Fig. 3) geführt werden. Zusätzlich zur Luftzufuhr 27 ist an der Motorglocke 21 ein Spülanschluss 28 vorgesehen. Der Spülanschluss 28 dient zum Anschließen einer entsprechenden Leitung und führt im Inneren der Motorglocke 21 ebenfalls zur Glockenringkammer 29.

Des Weiteren umfasst die Antriebseinheit 20 einen Motor 26, hier ausgebildet als Hydraulikmotor. Das außenseitige Ende der Antriebswelle 22 ist drehmomentübertragend mit der Ausgangswelle des Motors 26 verbunden.

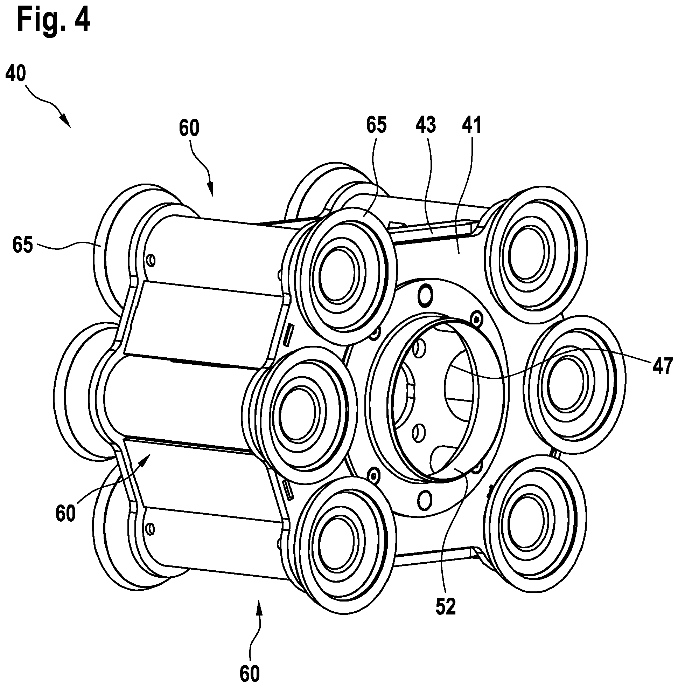

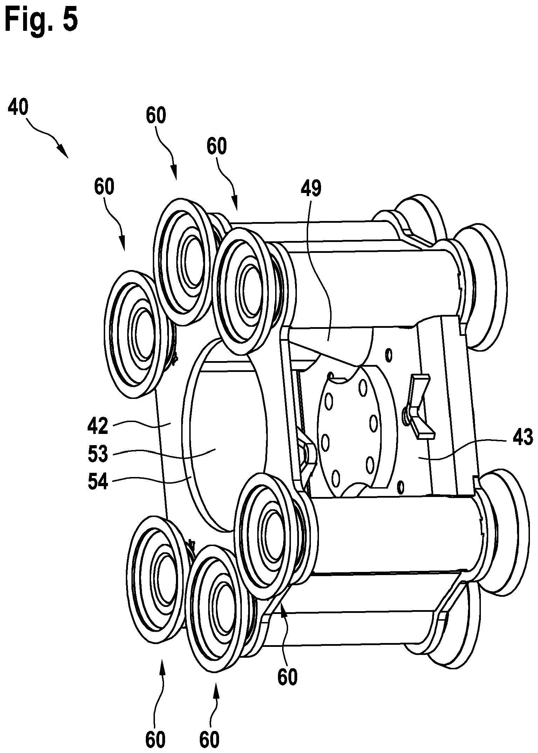

Fig. 3 zeigt eine Schnittansicht eines Details der Verteilvorrichtung 1. Die Drehachse 10 liegt dabei in der Schnittebene. Fig. 3 zeigt einen Teil des Rotors 40. Im Gesamten ist der Rotor 40 beispielsweise in den Fig. 4 und 5 gezeigt.

Des Weiteren zeigt Fig. 3, dass das Gehäuse 2 als innenseitigen Abschluss der Auslässe 7 eine Schneidplatte 11 aufweist. Auf der gegenüberliegenden Seite, also innenseitig der zulaufseitigen Stirnwand 5, befindet sich ebenfalls solch eine Schneidplatte 11. Die Schneidplatte 11 ist auswechselbar. Die Schneidplatte 11 weist zu jedem Auslass 7 eine entsprechende Durchgangsöffnung auf. Die Messer 65 des Rotors 40 streifen beim Rotieren des Rotors 40 innenseitig am Gehäuse 2, im gezeigten Ausführungsbeispiel innenseitig an der entsprechenden Schneidplatte 11.

Fig. 3 zeigt ferner, dass auf der Antriebswelle 22 eine Gleithülse 24 steckt. Zwischen Gleithülse 24 und Motorglocke 21 ist ein entsprechendes Gleitlager 25 vorgesehen, sodass die Antriebswelle 22 relativ zur Motorglocke 21 um die Drehachse 10 rotieren kann. Der Rotor 40 ist ausschließlich über die Antriebswelle 22 gelagert.

Der Rotor 40 weist eine antriebsseitige Rotoraußenwand 41 und eine zulaufseitige Rotoraußenwand 42 (s. Fig. 5) auf. Zwischen diesen beiden Rotoraußenwänden 41, 42 umfasst der Rotor 40 eine Rotorinnenwand 43. Die beiden Rotoraußenwände 41, 42 sowie die Rotorinnenwand 43 stehen im Wesentlichen senkrecht zur Drehachse 10. Wie Fig. 3 zeigt, befindet sich die Rotorinnenwand 43 relativ nah an der antriebsseitigen Rotoraußenwand 41. Zwischen der antriebsseitigen Rotoraußenwand 41 und der Rotorinnenwand 43 ist eine Luftverteilkammer 45 gebildet.

Die Antriebswelle 22 erstreckt sich durch die antriebsseitige Stirnwand 4 hindurch in das Innere des Rotors 40 und somit auch in das Innere der Luftverteilkammer 45. Der Wellenflansch 32 am Ende der Antriebswelle 22 ist über die Bolzen 33 mit der Rotorinnenwand 43 fest verbunden. Hierzu ist die Rotorinnenwand 43 mit einer Flanschplatte 32 verstärkt.

In der Luftverteilkammer 45 des Rotors 40 können sich mehrere Distanzstücke 50 befinden, die stabilisierend und abstandsgebend zwischen antriebsseitiger Rotoraußenwand 41 und Rotorinnenwand 43 angeordnet sind. Diese Distanzstücke 50 sind im Vergleich zur Größe der Luftverteilkammer 45 relativ klein ausgebildet und haben keinen wesentlichen Einfluss auf das Volumen der Luftverteilkammer 45.

Des Weiteren zeigt Fig. 3 die bereits erwähnte Glockenringkammer 29 in der Motorglocke 21. Die Luftzufuhr 27 von den Anschlussstutzen verläuft schräg zur Drehachse 10 und münden in dieser Glockenringkammer 29. Ebenso mündet der Spülanschluss 28 in der Glockenringkammer 29.

Die Glockenringkammer 29 ist axialseitig in Richtung des Rotors 40 offen. Darüber hinaus erstreckt sich im hier gezeigten Ausführungsbeispiel die Motorglocke 21 durch die antriebsseitige Stirnwand 4 und durch die Schneidplatte 10 hindurch ins Innere des Gehäuses 2.

Der Übergang von der Luftzufuhr 27, insbesondere der Glockenringkammer 29, in die Luftverteilkammer 45 wird ist als Luftübertragungsraum 51 bezeichnet. Dieser Luftübertragungsraum 51 ist radial außenseitig begrenzt durch einen Ringbereich 52. Im gezeigten Ausführungsbeispiel ist der Ringbereich 52 drehfest verbunden mit dem Rotor 40. Insbesondere ist hierzu ein im Querschnitt L-förmiger Ring benutzt, der außenseitig an der antriebsseitigen Rotoraußenwand 41 angeordnet ist.

An der radialen Außenseite des Ringbereichs 42 ist eine erste Dichtung 30 vorgesehen. Die erste Dichtung 30 dichtet zwischen dem Ringbereich 52 und der Motorglocke 21.

Radial innenseitig ist der Luftübertragungsraum 51 durch die Motorglocke 21 und die Antriebswelle 22 begrenzt. Hier dichtet eine zweite Dichtung 31 zwischen der Motorglocke 21 und der Antriebswelle 22, insbesondere der Gleithülse 24.

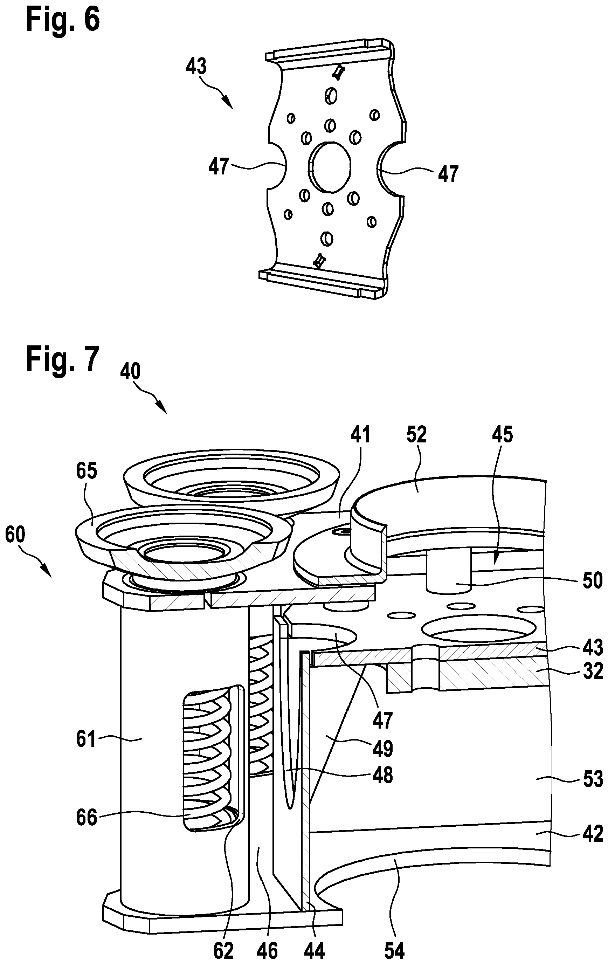

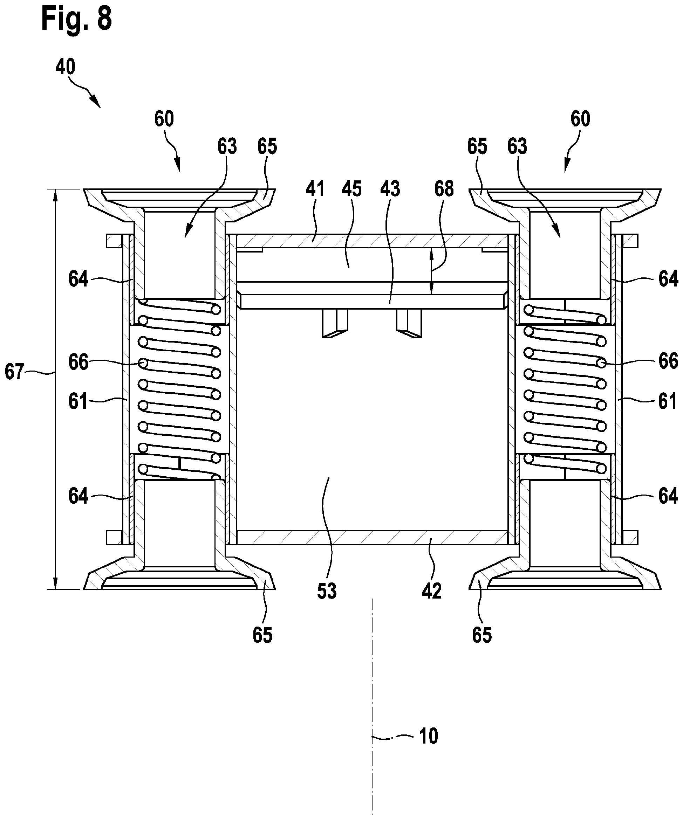

Fig. 4 zeigt den gesamten Rotor 40 von der Antriebsseite. Fig. 5 zeigt den gesamten Rotor 40 von der Zulaufseite. Fig. 6 zeigt im Detail die Rotorinnenwand 43. Fig. 7 und 8 zeigen Schnittansichten des Rotors 40.

Wie bereits beschrieben, weist der Rotor 40 eine zulaufseitige Rotoraußenwand 42 auf. Gemäß Fig. 5 ist in dieser zulaufseitigen Rotoraußenwand 42 ein Durchbruch 54 gebildet. Dieser Durchbruch 54 fluchtet mit dem Zulauf 6. Die zulaufseitigen Rotoraußenwand 42 ist vom Gehäuse 2 beabstandet. Dadurch kann über den Zulauf 6 zuströmende Trübe noch vor der zulaufseitigen Rotoraußenwand 42 radial nach außen strömen. Gleichzeitig strömt jedoch ein wesentlicher Teil der Trübe auch durch die zulaufseitige Rotoraußenwand 42 in das Innere des Rotors 40. Im Rotor 40 ist somit ein Trübenraum 53 gebildet. Der Trübenraum 53 definiert sich durch den Abstand zwischen Rotorinnenwand 43 und zulaufseitiger Rotoraußenwand 42. Wie insbesondere Fig. 5 zeigt, ist der Rotor 40 an zwei gegenüberliegenden Seiten radial offen, sodass Trübe aus dem Trübenraum 53 radial nach außen in Richtung des Gehäuses 3 strömen kann.

Die beiden Schnittansichten in Fig. 7 und 8 zeigen den Aufbau der einzelnen Messeranordnungen 60. Im gezeigten Ausführungsbeispiel weist der Rotor 40 sechs Messeranordnungen 60 auf. Allerdings kann der Rotor 40 beispielsweise auch zwei, drei, vier, fünf, sieben oder acht Messeranordnungen 60 aufweisen.

Die einzelne Messeranordnung 60 umfasst ein Rohr 21. Das Rohr 21 ist fest verbunden mit den beiden Rotoraußenwänden 41, 42. In dem Rohr 21 befinden sich zwei gegenüberliegende rohrförmige Messer 65. Die Messer 65 sind in entsprechenden Messergleitlagern 64 parallel zur Drehachse 10 gleitbeweglich. Hierzu ist eine Feder 66 zwischen den beiden Messern 65 vorgesehen. Die Feder 66 drückt die beiden Messer 65 auseinander und somit gegen die Schneidplatten 11. Das Rohr 61 mit den rohrförmigen Messern 65 bildet einen Hohlraum 63 im Inneren der jeweiligen Messeranordnung 60. Über diesen Hohlraum 63 kann Druckluft in Axialrichtung nach außen, nämlich durch die Messer 65 hindurch in den jeweiligen Auslass 7 strömen.

Insbesondere Fig. 7 zeigt, dass jedes Rohr 61 eine Aussparung 62 aufweist. Der Rotor 40 weist radial innerhalb der Messeranordnungen 60 zumindest eine Rotorradialwand 44 auf. Die außenliegenden Messeranordnungen 60 und die innerhalb davon liegende Rotorradialwand 44 bilden eine Zwischenkammer 46. Im gezeigten Ausführungsbeispiel münden die Aussparungen 62 von jeweils drei Messeranordnungen 60 in die Zwischenkammer 46. Dementsprechend umfasst der Rotor 40 zwei der Zwischenkammern 46.

Die Zwischenkammern 46 sind wiederum luftleitend mit der Luftverteilkammer 45 verbunden. Allerdings kann bei anderer Konstruktion auch eine anderweitige, beispielsweise auch direkte Verbindung zwischen Luftverteilkammer 45 und Hohlraum 63 erfolgen.

Im gezeigten Ausführungsbeispiel weist die Rotorinnenwand 43 eine Axialluftöffnung 47 auf. Die Rotorradialwand 44 weist eine Radialluftöffnung 48 auf. Die beiden Öffnungen 47, 48 sind über ein Übergangsstück 49 miteinander verbunden. Dieses Übergangsstück 49 trennt die luftführende Verbindung zwischen Zwischenkammer 46 und Luftverteilkammer 45 gegenüber dem Trübenraum 53 ab.

Fig. 8 zeigt ferner, dass der gesamte Rotor 40 parallel zur Drehachse 10 eine erste Breite 67 aufweist. Die größte Breite der Luftverteilkammer 45, ebenfalls parallel zur Drehachse 10, ist als zweite Breite 68 eingezeichnet. Die zweite Breite 68 ist wesentlich kleiner als die erste Breite 67.

Neben der vorstehenden schriftlichen Beschreibung der Erfindung wird zu deren ergänzender Offenbarung hiermit explizit auf die zeichnerische Darstellung der Erfindung in allen Figuren Bezug genommen.

### Bezugszeichenliste

- 1: Verteilvorrichtung
- 2: Gehäuse
- 3: Gehäusemantel
- 4: antriebseiteige Stirnwand
- 5: zulaufseitige Stirnwand
- 6: Zulauf
- 7: Auslässe
- 8: Ablauf
- 9: Deckel
- 10: Drehachse
- 11: Schneidplatte
- 20: Antriebseinheit
- 21: Motorglocke
- 22: Antriebswelle
- 23: Wellenflansch
- 24: Gleithülse
- 25: Gleitlager
- 26: Motor
- 27: Luftzufuhr
- 28: Spülanschluss
- 29: Glockenringkammer
- 30: erste Dichtung
- 31: zweite Dichtung
- 32: Flanschplatte
- 33: Bolzen
- 40: Rotor
- 41: antriebsseitige Rotoraußenwand
- 42: zulaufseitige Rotoraußenwand
- 43: Rotorinnenwand
- 44: Rotorradialwand
- 45: Luftverteilkammer
- 46: Zwischenkammer
- 47: Axialluftöffnung
- 48: Radialluftöffnung
- 49: Übergangsstück
- 50: Distanzstück(e)
- 51: Luftübertragungsraum
- 52: Ringbereich
- 53: Trübenraum
- 54: Durchbruch
- 60: Messeranordnung
- 61: Rohr
- 62: Aussparung
- 63: Hohlraum
- 64: Messergleitlager
- 65: rohrförmige Messer
- 66: Feder
- 67: erste Breite
- 68: zweite Breite

## Patentansprüche

1. Verteilvorrichtung (1) für eine flüssige und feste Bestandteile enthaltende Trübe, umfassend:
• ein Gehäuse (2) mit einem Zulauf (6) für die Trübe, einer antriebsseitigen Stirnwand (4), einer gegenüberliegenden weiteren Stirnwand (5) und mehreren Auslässen (7) an zumindest einer der beiden Stirnwände (4, 5) zum Verteilen der Trübe,
• einen im Gehäuse (2), um eine Drehachse (10) drehbar angeordneten Rotor (40) mit
▪ zumindest einer Messeranordnung (60) zum gehäuseinnenseitigen Überstreifen der Auslässe (7) und
▪ einer Luftverteilkammer (45) zum Verteilen von Druckluft auf die Messeranordnung(en) (60),
• eine Antriebseinheit (20) mit einem außerhalb des Gehäuses (2) angeordneten Motor (26) und einer zur Drehachse (10) koaxialen Antriebswelle (22), die durch die antriebsseitige Stirnwand (4) führt und mit dem Rotor (40) drehfest verbunden ist,
• und einen ringförmigen Luftübertragungsraum (51), der zur Drehachse (10) koaxial und radial außerhalb der Antriebswelle (22) angeordnet ist, wobei der Luftübertragungsraum (51) gehäuseaußenseitig mit einer Luftzufuhr (27) für Druckluft und gehäuseinnenseitig mit der Luftverteilkammer (45) luftleitend verbunden ist, **dadurch gekennzeichnet, dass**
der ringförmige Luftübertragungsraum (51) durch die antriebsseitige Stirnwand (4) führt.

2. Verteilvorrichtung nach Anspruch 1, wobei die Luftverteilkammer (45) durch eine antriebseitige Rotoraußenwand (41) und eine zur Rotoraußenwand (41) entlang der Drehachse (10) beabstandete Rotorinnenwand (43) gebildet ist.

3. Verteilvorrichtung nach einem der vorhergehenden Ansprüche, wobei die Luftverteilkammer (45) radial innenseitig durch die Antriebswelle (22) begrenzt ist.

4. Verteilvorrichtung nach den Ansprüchen 2 und 3, wobei die Luftverteilkammer (45) in der antriebseitigen Rotoraußenwand (41) eine Öffnung aufweist, durch die die Antriebswelle (22) verläuft, wobei radial außerhalb der Antriebwelle (22) ein ringförmiger Bereich der Öffnung als Übergang des Luftübertragungsraums (51) in die Luftverteilkammer (45) gebildet ist.

5. Verteilvorrichtung nach einem der Ansprüche 2 bis 4, wobei die Antriebwelle (22) an der Rotorinnenwand (43) angeflanscht ist und die Rotorinnenwand (43) zur Übertragung des Drehmoments von der Antriebwelle (22) auf den Rest des Rotors (40) angeordnet ist.

6. Verteilvorrichtung nach einem der vorhergehenden Ansprüche, wobei die Antriebseinheit (20) eine Motorglocke (21) umfasst, wobei die Antriebswelle (22) in der Motorglocke (21) drehbeweglich gelagert ist, wobei eine Seite der Motorglocke (21) an der antriebsseitigen Stirnwand (4) des Gehäuses (2) angeflanscht ist und an der gegenüberliegenden Seite der Motor (26) angeflanscht ist, und wobei die Luftzufuhr (27) an der Motorglocke (21) ausgebildet ist.

7. Verteilvorrichtung nach Anspruch 6, wobei der Luftübertragungsraum (51) radial außenseitig durch einen zur Drehachse (10) koaxialen Ringbereich (52) begrenzt ist, wobei
• der Ringbereich (52) ein Bestandteil des Rotors (40) ist und zwischen dem Ringbereich (52), insbesondere an seiner radialen Außenseite, und der Motorglocke (21) eine erste gleitende Dichtung (30) angeordnet ist,
• oder der Ringbereich motorglockenseitig angeordnet ist und zwischen dem Ringbereich, insbesondere an seiner radialen Außenseite, und dem Rotor eine erste gleitende Dichtung angeordnet ist.

8. Verteilvorrichtung nach Anspruch 7, wobei die Motorglocke (21) durch die antriebsseitige Stirnwand (4) hindurch in das Innere des Gehäuses (2) ragt, dabei vom Rotor (40) beabstandet ist und der Ringbereich (52) diesen Abstand überbrückt.

9. Verteilvorrichtung nach einem der Ansprüche 6 bis 8, wobei der Luftübertragungsraum (51) radial innenseitig durch die Motorglocke (21) und/oder die Antriebswelle (22) begrenzt ist.

10. Verteilvorrichtung nach einem der vorhergehenden Ansprüche, wobei die zumindest eine Messeranordnung (60) einen Hohlraum (63) und zumindest ein ring- oder rohrförmiges Messer (65) umfasst, wobei der Hohlraum (63) luftleitend mit der Luftverteilkammer (45) verbunden ist, wobei das Messer (65) beim Drehen des Rotors (40) die Auslässe (7) gehäuseinnenseitig überstreift und dabei der Hohlraum (63) durch das ring- oder rohrförmige Messer (65) hindurch luftleitend mit dem Auslass (7) verbunden ist.

11. Verteilvorrichtung nach Anspruch 10, wobei die Hohlräume (63) mehrerer Messeranordnungen (60) über jeweils eine Aussparung (62) mit einer Zwischenkammer (46) des Rotors (40) luftleitend verbunden sind, und wobei die Luftverteilkammer (45) luftleitend mit der Zwischenkammer (46) verbunden ist.

12. Verteilvorrichtung nach einem der der Ansprüche 2 bis 11, wobei der Rotor (40) eine weitere Rotoraußenwand (42) aufweist, wobei die Rotorinnenwand (43) zwischen den beiden Rotoraußenwänden (41, 42), vorzugsweise näher an der antriebsseigen Rotoraußenwand (42), angeordnet ist.

13. Verteilvorrichtung nach Anspruch 12, wobei die weitere Rotoraußenwand (42) einen Durchbruch (54) zum Strömen der Trübe in einen innenliegenden Trübenraum (53) des Rotors (40) umfasst.

14. Verteilvorrichtung nach einem der vorhergehenden Ansprüche, wobei der Rotor (40) radial außenseitig stellenweise offen ist, sodass die Trübe durch den Rotor (40) hindurch radial nach außen in einen Freiraum zwischen Rotor (40) und Gehäuse (2) strömen kann.

15. Verteilvorrichtung nach einem der vorhergehenden Ansprüche, wobei der Rotor (40) parallel zur Drehachse (10) eine erste Breite (67) und die Luftverteilkammer (45) parallel zur Drehachse (10) eine lichte zweite Breite (68) aufweist, wobei die zweite (68) Breite höchstens 50%, vorzugsweise höchsten 35%, besonders vorzugsweise höchstens 25%, der ersten Breite (67) beträgt.

## Claims

1. Distribution device (1) for a slurry comprising liquid and solid constituents, comprising:
a housing (2) with an inlet (6) for the slurry, a drive-side end wall (4), an opposite further end wall (5) and a plurality of outlets (7) at at least one of the two end walls (4, 5) for distributing the slurry,
a rotor (40), which is arranged in the housing (2) and rotatable about a rotation axis (10), comprising
- at least one blade arrangement (60) for sweeping over the outlets (7) at the inside of the housing and
- an air distribution chamber (45) for distributing compressed air to the blade arrangement(s) (60),
a drive unit (20) with a motor (26) arranged outside the housing (2) and a drive shaft (22) which is coaxial with the rotation axis (10), which passes through the drive-side end wall (4) and is connected to the rotor (40) in a rotationally fixed manner
and an ring-shaped air transmission chamber (51), which is arranged coaxially with respect to the rotation axis (10) and radially outside the drive shaft (22), wherein the air transmission chamber (51) is connected air-conductively to an air supply (27) for compressed air at the outside of the housing and to the air distribution chamber (45) at the inside of the housing, **characterized in that** the ring-shaped air transmission chamber (51) passes through the drive-side end wall (4).

2. Distribution device according to claim 1, wherein the air distribution chamber (45) is formed through a rotor outer wall (41) at the drive-side and a rotor inner wall (43) spaced from the rotor outer wall (41) along the rotation axis (10).

3. Distribution device according to any of the preceding claims, wherein the air distribution chamber (45) is delimited radially at the inside by the drive shaft (22).

4. Distribution device according to claims 2 and 3, wherein the air distribution chamber (45) comprises an opening in the rotor outer wall (41) at the drive-side, through the opening the drive shaft (22) extends, wherein radially outside the drive shaft (22) an ring-shaped region of the opening is formed as a transition of the air transmission chamber (51) into the air distribution chamber (45).

5. Distribution device according to any one of claims 2 to 4, wherein the drive shaft (22) is flanged to the rotor inner wall (43) and the rotor inner wall (43) is arranged to transmit torque from the drive shaft (22) to the rest of the rotor (40).

6. Distribution device according to one of the preceding claims, wherein the drive unit (20) comprises a motor flange (21), wherein the drive shaft (22) is rotatably mounted in the motor flange (21), wherein one side of the motor flange (21) is flanged at the drive-side end wall (4) of the housing (2) and the motor (26) is flanged at the opposite side, and wherein the air supply (27) is formed at the motor flange (21).

7. Distribution device according to claim 6, wherein the air transmission space (51) is delimited radially at the outside through an ring region (52) coaxial to the rotation axis (10), wherein
- the ring region (52) is a component of the rotor (40) and a first sliding seal (30) is arranged between the ring region (52), in particular at its radial outer side, and the motor flange (21),
- or the ring region is arranged at the side of the motor flange and a first sliding seal is arranged between the ring region, in particular at its radial outer side, and the rotor.

8. Distribution device according to claim 7, wherein the motor flange (21) protrudes through the drive-side end wall (4) into the interior of the housing (2), is thereby spaced from the rotor (40) and the ring region (52) bridges this distance.

9. Distribution device according to one of claims 6 to 8, wherein the air transmission space (51) is delimited radially at the inside through the motor flange (21) and/or the drive shaft (22).

10. Distribution device according to any one of the preceding claims, wherein the at least one blade assembly (60) comprises a cavity (63) and at least one ring- or tube-shaped blade (65), wherein the cavity (63) is air-conductively connected to the air distribution chamber (45), wherein the blade (65) sweeps over the outlets (7) at the inside of the housing when the rotor (40) is rotated and thereby the cavity (63) is air-conductively connected to the outlet (7) via the ring- or tube-shaped blade (65).

11. Distribution device according to claim 10, wherein the cavities (63) of a plurality of blade assemblies (60) are each air-conductively connected to an intermediate chamber (46) of the rotor (40) via a recess (62), and wherein the air distribution chamber (45) is air-conductively connected to the intermediate chamber (46).

12. Distribution device according to any one of claims 2 to 11, wherein the rotor (40) comprises a further rotor outer wall (42), wherein the rotor inner wall (43) is arranged between the two rotor outer walls (41, 42), preferably closer to the drive-side rotor outer wall (42).

13. Distribution device according to claim 12, wherein the further rotor outer wall (42) comprises an aperture (54) for flowing the slurry into an internal slurry space (53) of the rotor (40).

14. Distribution device according to one of the preceding claims, wherein the rotor (40) is radially at the outside open at some places, so that the slurry can flow radially outwardly through the rotor (40) into a free space between the rotor (40) and the housing (2).

15. Distribution device according to one of the preceding claims, wherein the rotor (40) comprises a first width (67) parallel to the rotation axis (10) and the air distribution chamber (45) comprises a clear second width (68) parallel to the rotation axis (10), wherein the second (68) width is at most 50%, preferably at most 35%, particularly preferably at most 25%, of the first width (67).

## Revendications

1. Dispositif de distribution (1) pour une eau boueuse contenant des constituants liquides et solides, comprenant :
- un boîtier (2) avec une arrivée (6) pour l'eau boueuse, avec une paroi frontale (4) côté entraînement, une autre paroi frontale (5) opposée et plusieurs sorties (7) sur au moins une des deux parois frontales (4, 5) pour distribuer l'eau boueuse,
- un rotor (40) disposé dans le boîtier (2), de manière à pouvoir tourner autour d'un axe de rotation (10), avec
- - au moins un ensemble de lame (60) pour racler côté intérieur de boîtier les sorties (7), et
- - une chambre de distribution d'air (45) pour distribuer de l'air comprimé sur l'ensemble/les ensembles de lame (60),
- une unité d'entraînement (20) avec un moteur (26) disposé à l'extérieur du boîtier (2) et un arbre d'entraînement (22) coaxial par rapport à l'axe de rotation (10), qui mène à travers la paroi frontale (4) côté entraînement et est relié de manière solidaire en rotation au rotor (40),
- et un espace de transfert d'air (51) de forme annulaire, qui est disposé de manière coaxiale par rapport à l'axe de rotation (10) et de manière radiale à l'extérieur de l'arbre d'entraînement (22), dans lequel l'espace de transfert d'air (51) est relié avec acheminement d'air côté extérieur de boîtier à une arrivée d'air (27) pour de l'air comprimé et côté intérieur de boîtier à la chambre de distribution d'air (45), **caractérisé en ce que** l'espace de transfert d'air (51) de forme annulaire mène à travers la paroi frontale (4) côté entraînement.

2. Dispositif de distribution selon la revendication 1, dans lequel la chambre de distribution d'air (45) est formée par une paroi extérieure de rotor (41) côté entraînement et une paroi intérieure de rotor (43) disposée à distance par rapport à la paroi extérieure de rotor (41) le long de l'axe de rotation (10).

3. Dispositif de distribution selon l'une quelconque des revendications précédentes, dans lequel la chambre de distribution d'air (45) est délimitée radialement côté intérieur par l'arbre d'entraînement (22).

4. Dispositif de distribution selon les revendications 2 et 3, dans lequel la chambre de distribution d'air (45) présente dans la paroi extérieure de rotor (41) côté entraînement une ouverture, à travers laquelle s'étend l'arbre d'entraînement (22), dans lequel une zone de forme annulaire de l'ouverture est formée en tant que passage de l'espace de transfert d'air (51) dans la chambre de distribution d'air (45) radialement à l'extérieur de l'arbre d'entraînement (22).

5. Dispositif de distribution selon l'une quelconque des revendications 2 à 4, dans lequel l'arbre d'entraînement (22) est installé par des brides sur la paroi intérieure de rotor (43) et la paroi intérieure de rotor (43) est disposée sur le reste du rotor (40) pour le transfert du couple de rotation de l'arbre d'entraînement (22).

6. Dispositif de distribution selon l'une quelconque des revendications précédentes, dans lequel l'unité d'entraînement (20) comprend une cloche de moteur (21), dans lequel l'arbre d'entraînement (22) est monté de manière mobile par rotation dans la cloche de moteur (21), dans lequel un côté de la cloche de moteur (21) est installé par des brides sur la paroi frontale (4) côté entraînement du boîtier (2) et le moteur (26) est installé par des brides sur le côté opposé, et dans lequel l'arrivée d'air (27) est réalisée sur la cloche de moteur (21).

7. Dispositif de distribution selon la revendication 6, dans lequel l'espace de transfert d'air (51) est délimité radialement côté extérieur par une zone annulaire (52) coaxiale par rapport à l'axe de rotation (10), dans lequel
- la zone annulaire (52) fait partie du rotor (40) et un premier joint d'étanchéité (30) glissant est disposé entre la zone annulaire (52), en particulier sur son côté extérieur radial, et la cloche de moteur (21),
- ou la zone annulaire est disposée côté cloche de moteur et un premier joint d'étanchéité glissant est disposé entre la zone annulaire, en particulier sur son côté extérieur radial, et le rotor.

8. Dispositif de distribution selon la revendication 7, dans lequel la cloche de moteur (21) dépasse dans l'intérieur du boîtier (2) à travers la paroi frontale (4) côté entraînement de part en part, et est tenue à distance ce faisant du rotor (40) et la zone annulaire (52) surmonte ladite distance.

9. Dispositif de distribution selon l'une quelconque des revendications 6 à 8, dans lequel l'espace de transfert d'air (51) est délimité radialement côté intérieur par la cloche de moteur (21) et/ou l'arbre d'entraînement (22).

10. Dispositif de distribution selon l'une quelconque des revendications précédentes, dans lequel l'au moins un ensemble de lame (60) comprend un espace creux (63) et au moins une lame (65) de forme annulaire ou de forme tubulaire, dans lequel l'espace creux (63) est relié avec acheminement d'air à la chambre de distribution d'air (45), dans lequel la lame (65) racle côté intérieur de boîtier les sorties (7) lors de la rotation du rotor (40) et l'espace creux (63) est relié ce faisant avec acheminement d'air à la sortie (7) à travers la lame (65) de forme annulaire ou tubulaire de part en part.

11. Dispositif de distribution selon la revendication 10, dans lequel les espaces creux (63) de plusieurs ensembles de lame (60) sont reliés avec acheminement d'air à une chambre intermédiaire (46) du rotor (40) par l'intermédiaire de respectivement un évidement (62), et dans lequel la chambre de distribution d'air (45) est reliée avec acheminement d'air à la chambre intermédiaire (46).

12. Dispositif de distribution selon l'une quelconque des revendications 2 à 11, dans lequel le rotor (40) présente une autre paroi extérieure de rotor (42), dans lequel la paroi intérieure de rotor (43) est disposée entre les deux parois extérieures de rotor (41, 42), de préférence davantage à proximité sur la paroi extérieure de rotor (42) côté entraînement.

13. Dispositif de distribution selon la revendication 12, dans lequel l'autre paroi extérieure de rotor (42) comprend un ajour (54) pour écouler l'eau boueuse dans un espace d'eau boueuse (53), situé à l'intérieur, du rotor (40).

14. Dispositif de distribution selon l'une quelconque des revendications précédentes, dans lequel le rotor (40) est ouvert par endroits radialement côté extérieur si bien que l'eau boueuse peut s'écouler à travers le rotor (40) de part en part radialement vers l'extérieur dans un espace libre entre le rotor (40) et le boîtier (2).

15. Dispositif de distribution selon l'une quelconque des revendications précédentes, dans lequel le rotor (40) présente de manière parallèle par rapport à l'axe de rotation (10) une première largeur (67) et la chambre de distribution d'air (45) présente de manière parallèle par rapport à l'axe de rotation (10) une deuxième petite largeur (68), dans lequel la deuxième largeur (68) représente au maximum 50 %, de préférence au maximum 35 %, de manière particulièrement préférée au maximum 25 % de la première largeur (67).
